# EUROPEAN PATENT SPECIFICATION

(11) **EP 1 310 317 B1**
(45) Date of publication and mention of the grant of the patent: **27.05.2009**
(21) Application number: 02025079.1
(22) Date of filing: 12.11.2002
(51) Int. Cl.: B23K 3/06, B23K 1/08

(54) **Soldering machine**
Lötvorrichtung
Machine de brasage à la vague

(30) Priority: 12.11.2001 JP 2001345753
(43) Date of publication of application: 14.05.2003
(73) Proprietor: KABUSHIKI KAISHA TOSHIBA, Tokyo (JP)
(72) Inventor: Aizawa, Rie, Intellectual Property Division, Minato-ku, Tokyo (JP); Ota, Hiroyuki, Intellectual Property Division, Minato-ku, Tokyo (JP); Abe, Hiroaki, Intellectual Property Division, Minato-ku, Tokyo (JP)
(74) Representative: Kramer - Barske - Schmidtchen

(56) References cited:
- EP-A- 1 308 232
- US-A- 4 568 012
- US-A- 4 828 459

## Description

This invention relates to a soldering machine, and more particularly to a soldering machine used for a soldering process on the back side of a printed circuit board and the like, by ejecting pressurized molten solder thereon.

Soldering machines are well known for soldering conductive lead wires of electronic parts onto a circuit pattern on a printed circuit board. Because molten solder is a kind of conducting fluid, an electromagnetic pump has been used to convey molten solder. For this reason, a soldering machine having an electromagnetic pump has been developed, such as disclosed in Japanese Patent Disclosure (Kokai) No. 58-122170 and US-A-4 568 012, for example.

The electromagnetic pump in a conventional soldering machine has a solder vessel having an iron core and a outer duct to form a passage for molten solder. The other elements such as coils, a stator including most parts of the iron core, a stator support and the like, are disposed in the lower space below the solder vessel. Due to electromagnetic force generated by the coils and the electric current applied thereto, molten solder moves in the solder vessel and is ejected from nozzles onto a printed circuit board.

The conventional soldering machine using an electromagnetic pump, however, the coils receive heat from different heat sources; one is from the solder melt by the heater, and another is Joule heat generated by the coils themselves. Therefore, a cooling system, such as a fan, is necessary in view of heat resistivity of the coils.

Plus, according to an environmental point of view, replacing conventional solder with leadless solder, such as, an alloy containing Sn, Ag and Cu, for example, is widely demanded. In the case of applying the leadless solder, the melting point of the leadless solder is assumed to be higher, by approximately up to 50 °C , in comparison with that of the conventional solder, which has a melting point of approximately 200 °C However, improving the performance of the heater to produce a higher temperature adversely affects the temperature of the coils of the electromagnetic pump.

EP 1 308 232 A1, which is a document according to Art. 54(3) and (4) EPC, discloses a soldering apparatus for soldering a printed wiring board, including a solder vessel (1) for containing a molten solder, a nozzle (8) disposed in the vessel and having a first opening (37) and a second opening (21), and an electromagnetic pump (12) secured in the vessel and including a tubular member (20a) defining a solder flow path therein and having an inlet (34) and an outlet (13) connected to the second opening (21) of the nozzle.

US 4,568,012 discloses a soldering apparatus having a base, and a solder tank and a nozzle arranged in tandem with the base, wherein an electromagnetic pump of the soldering apparatus is not immerged in the solder tank.

US 4,828,459 discloses an annular electromagnetic induction pump which operates without an external cooling source in pumping molten metals, and which is immerged in molten metal.

The present invention has been made in view of the above-mentioned circumstances and is intended to solve the above-mentioned problems. In particular, this invention provides a soldering machine capable of utilizing solder having a high melting point by improving the thermal balance thereof.

Additional object and advantages of the invention will be apparent to persons skilled in this field from the following description, or may be learned by practice of the application.

The present invention provides a soldering machine, according to claim 1. Further developments of the present invention are set out in the dependent claims.

Further objects, features and advantages of the present invention will become apparent from the detailed description of embodiments that allows, when considered together with the accompanying figures of drawings.

In the drawings:
Fig. 1 is a diagrammatic view showing a soldering machine in which the teaching of the invention can be applied.
Fig. 2 is a perspective sectional view showing an annular linear type electromagnetic pump applied to the soldering machine of Fig. 1.
Fig. 3 is another sectional view showing the annular linear type electromagnetic pump of Fig. 1.
Fig. 4 is a diagrammatic view showing an inner duct being removed from the electromagnetic pump.
Fig 5 is a sectional view showing the connecting portion of an outer duct and an inner duct of Fig. 1.
Fig. 6 is a partial perspective view showing a locking structure of Fig. 5.
Fig. 7 is a diagrammatic view showing a soldering machine of an example.
Figs. 8A and 8B are partial perspective views showing main portions of the stators of a flat linear type electromagnetic pump applied to the soldering machine of Fig. 7.
Fig. 9 is a sectional view of the annular linear type electromagnetic pump of the soldering machine of the invention, showing the features of the flat plate (36) and the flow skirt (37).
Fig. 10 is a perspective view showing a helical type electromagnetic pump applied to the soldering machine of an example not according to the present invention.
Fig. 11 is a diagrammatic sectional view showing a soldering machine of another example not according to the present invention.
Fig. 12 is another diagrammatic sectional view showing a soldering machine of Fig. 11.
Fig. 13 is a diagrammatic sectional view showing annular linear type electromagnetic pumps applied to the soldering machine of still another example not according to the present invention.

### DETAILED DESCRIPTION OF PREFERRED EMBODIMENTS

A preferred embodiment of a soldering machine of the invention and comparative examples will now be specifically described in more detail with reference to the accompanying drawings. Wherever possible, the same reference numbers will be used throughout the drawings to refer to the same or like parts.

### (First example)

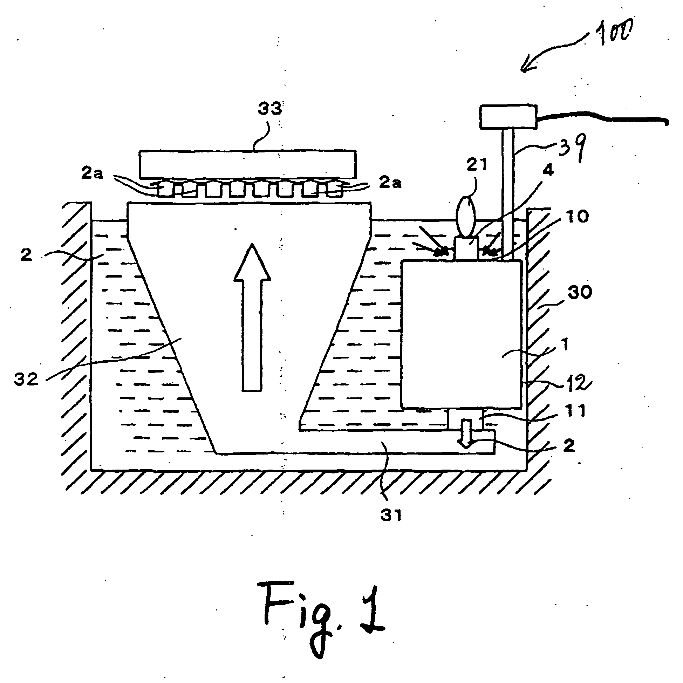

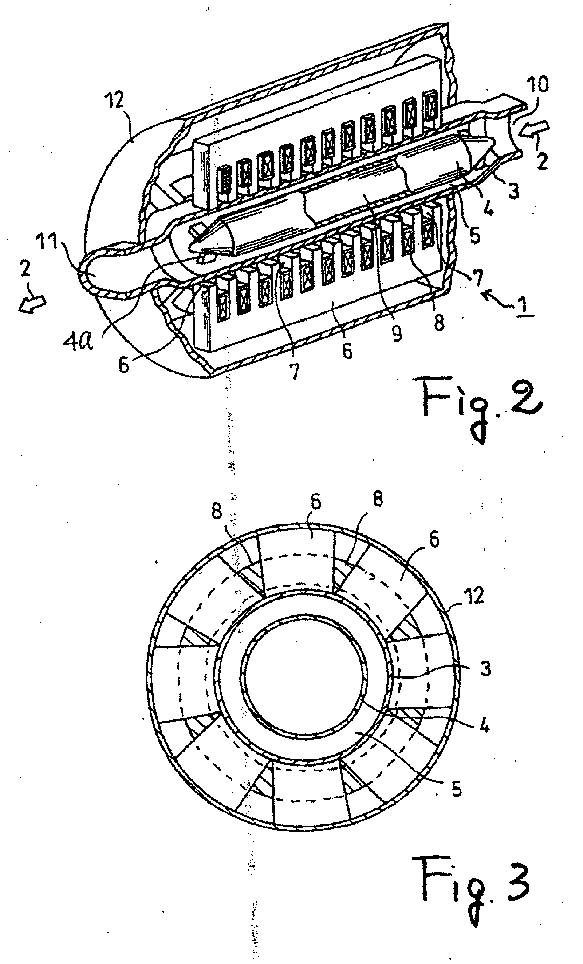

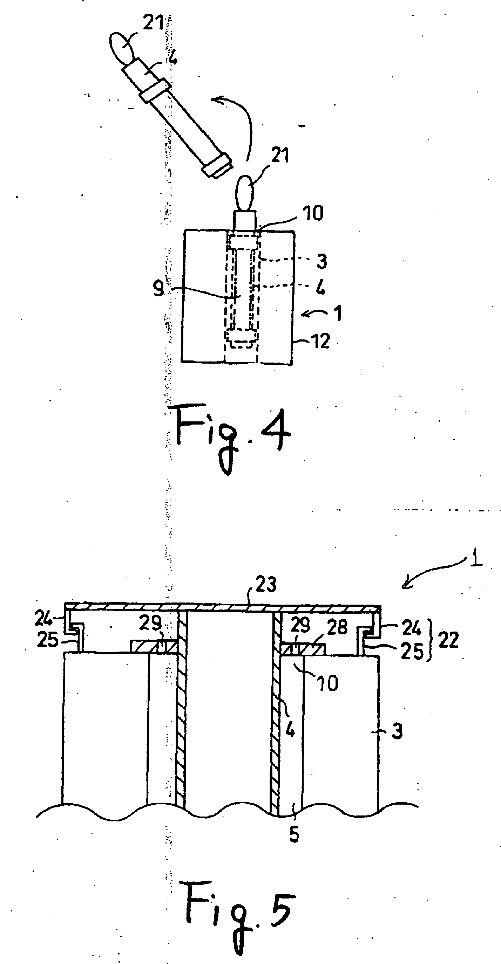

The first example is shown in Figs. 1, 2, 3 and 4. Fig. 1 is a diagram showing the soldering machine 100 of the first example. Fig. 2 is a perspective sectional view, and Fig. 3 is another sectional view showing an annular linear type electromagnetic pump applied to the soldering machine 100 of the first embodiment. Fig. 4 is a diagram showing an inner duct being removed from the electromagnetic pump.

First, the movement of solder is explained as follows. In Fig. 1, a solder vessel 30 stores solder 2 in the molten state. The solder stored therein may be leadless solder, for example, and is heated by a conventional heater (not shown). In the solder vessel 30, an annular linear type electromagnetic pump 1 is disposed in the solder 2 such that the electromagnetic pump 1 is submerged below the liquid surface of solder 2.

Here, a pull-out ring 21 can be connected to an inner duct 4 of the electromagnetic pump 1 for extracting the inner duct 4 for overhaul. A cable conduit 39 is connected for supplying electrical power to the electromagnetic pump 1.

As shown in Figs 2 and 3, the electromagnetic pump 1 has an outer duct 3. The outer duct 3 has an entrance duct 10 and an exit duct 11 on both its ends. Together with the inner duct 4, the outer duct 3 forms an annular path 5 linearly along the center axis of the electromagnetic pump 1. Therefore, solder 2 introduced from the entrance duct 10 goes through the annular duct 5, and is emitted from the exit duct 11. The relative position of the outer duct 3 and the inner duct 4 is kept by projections 4a of the inner duct 4 by contacting the projections 4a to the outer duct 3. This means the sectional shape of the annular path 5 is kept constant.

The exit duct 11 guides solder to a nozzle 32 through a guide tube 31. The nozzle 32 has a plurality of spouting holes (not shown) on its exit, and faces an object to be soldered such as a printed circuit board 33. Therefore, solder 1 flowing the direction 2 shown by the arrow in the nozzle 32 is finally spouted 2a onto the printed circuit board 33.

The solder overflowing from the nozzle 32 returns to the solder vessel 30 again and is reused.

Next, the detailed structure of the electromagnetic pump 1 is explained as follows.

As shown in Figs. 2 and 3, a plurality of outer iron cores (first iron cores) 6 are connected to surround the outside surface of the outer duct 3, and are arranged along the circumferential direction. Each outer iron core 6 is made of laminated electromagnetic plates formed like a comb.

The clearances, which are constituted by the comb-shape of the outer iron cores 6, are defined as slots 7, and are set in parallel along the axial direction of the outer duct 3. Ring-like outer electromagnetic coils 8 are disposed in the slots 7, and are connected to each other to generate, a driving magnetic field by applying three-phase alternating current.

In the inner duct 4, an inner iron core (second iron core) 9 is disposed. The outer iron cores 6 and the inner iron core 9 act to generate magnetic field for moving solder, as well as to radiate Joule heat and the heat from the electromagnetic coils 8 to the molten solder 2.

Note that each electromagnetic plate may have holes to insert fixing parts. Therefore, the outer iron core 6 is manufactured such that the electromagnetic plates are laminated and then fixed together by the fixing parts. The electromagnetic plates of both sides of the outer iron core 6 may be chosen to maintain the lamination.

The outer iron cores 6 are surrounded by a casing 12 to seal those elements. Supporting structures (not shown) are disposed in the casing 12, and support each outer iron core 6 in a cantilevered fashion. For this reason, the outer iron cores 6 can be pressed against the outer duct 3.

The outer duct 3 and the casing 12 are made of nonmagnetic material. Preferably, the material is anti-corrosive against solder and flux as well as hard enough to withstand the high temperature of the solder 2.

The outer iron cores 6 and the inner iron core 9 are made of ferromagnetic material. The outer electromagnetic coils 8 are constituted by a combination of conductor and insulator; both the conductor and the insulator are anti-corrosive enough at the high temperature (approximately more than 250°C) of the solder 2 and at the high temperature of Joule heat generated by the outer electromagnetic coils 8.

In case of cleaning the inside of the electromagnetic pump 1, the process can be carried out as shown in Fig. 4. First, the ring 21 is connected to the top portion of the inner duct 4 adjacent to the entrance duct 10. Then, the hooked ring 21 is pulled out to remove the inner duct 4 in the outer duct 3. Thereby, solder oxide stuck in the annular path 5, on the surface of the outer duct 3 and the inner duct 4, can be removed readily.

Here, the inner duct 4 may have a projection that comes up to the liquid level of the solder 2 in the solder vessel 30. By connecting the ring to the projection, the inner duct 4 can be removed easily.

In order to keep the sectional shape of the annular path 5 constant, the outer duct 3 and the inner duct 4 may be connected such as shown in Fig. 5. Fig 5 shows a sectional view of the connecting portion of the outer duct 3 and the inner duct 4. The entrance side of the inner duct 4 extends past the edge of the outer duct 3, and is fixed to a plate 23. The plate 23 and the outer duct 3 are connected to each other via a locking structure 22. The locking structure 22 includes a hook 24 connected to the plate 23 and a hook 25 connected to the outer duct 3.

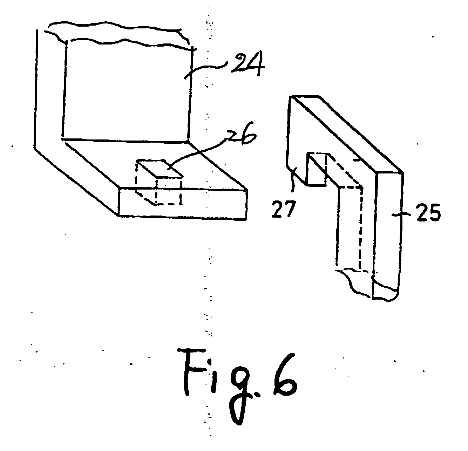

Fig. 6 is a partial perspective view showing one example of the locking structure 22 of Fig. 5. The hook 24 of the plate 23 has a recess 26, while the hook 25 of the outer duct 3 has a projection or claw 27. By turning the plate 23, the claw 27 is hooked in the recess 26, and then the plate 23 is secured and locked.

Once the lock structure 22 operates, a flange 28 fixed on the inner duct 4 is pressed onto the end of the outer duct 3. Meanwhile, the inner duct 4 is lifted upward by buoyancy in the solder vessel 30. These forces are well balanced to keep the parts in locked relationship.

Note that solder 2 enters the annular path 5 through a plurality of holes 29 formed in the flange 28.

In case of removing the inner duct 4 from the outer duct 3, the plate 23 is turned in the other direction to unlock. These steps can be executed readily.

According to the first example, the electromagnetic pump 1 of the soldering machine 100 is disposed in the solder vessel 30 and is submerged below the liquid surface of the solder 2. Therefore, the heat generated from the electromagnetic pump 1 can be conducted to the solder 2 in the solder vessel 30. Consequently, it is possible to heat the solder in the solder vessel to a higher temperature than in the conventional soldering machine. The capacity of the heater for melting the solder can be reduced accordingly.

This structure is also advantageous in applying leadless solder, because its melting point is approximately 50 °C higher than the conventional solder. If leadless solder is applied to the soldering machine 100, heat resistivity of the insulator used in the outer electromagnetic pump 1 may be considered. For this case, an insulator having enough heat resistivity at the melting point of leadless solder may be chosen. Thereby, the generated heat from the electromagnetic coils 8 can be conducted to the solder in the annular path 5 through the outer iron cores 6. This achieves a reduction of the cooling system in the casing 12.

In addition, by employing an annular linear type electromagnetic pump as the electromagnetic pump 1, the inner duct 4 can be removed from the electromagnetic pump 1. This simplifies the cleaning of the surface of the outer duct 3 and the inner duct 4; solder 2 in the annular path 5 leaves solder oxide on the outer duct 3 and the inner duct 4. Thereby, the sectional area of the annular path 5 can be constant, and fluctuation of the liquid level of the solder 2 in the solder vessel 30 can be limited.

As long as the electromagnetic pump 1 is submerged in the solder 2, any location and/or orientation of the electromagnetic pump 1 in the solder vessel 30 can be arbitrarily chosen. The axis of the electromagnetic pump 1 may be inclined in the solder vessel 30 or horizontal to the liquid level, for example.

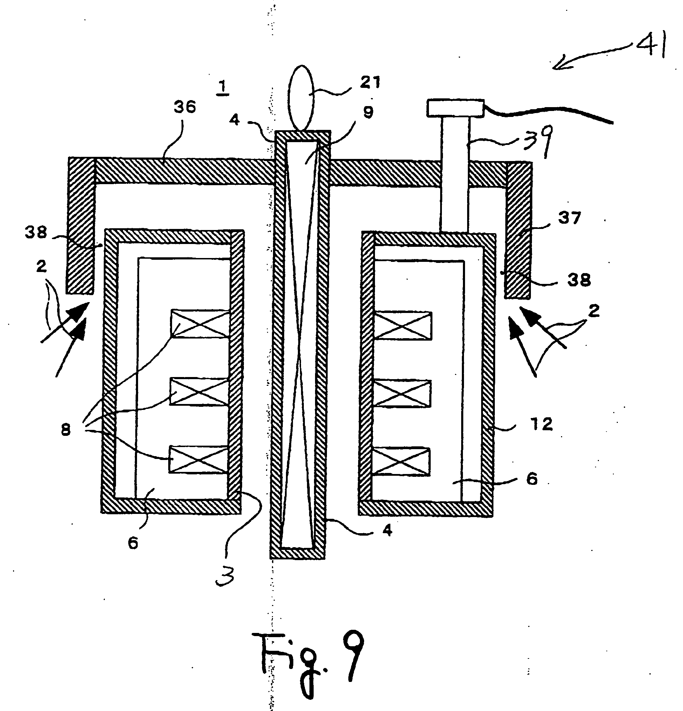

Features of the first embodiment of the invention are shown in Fig. 9, wherein the basic structure of the electromagnetic pump 41 is the same as the electromagnetic pump explained above.

According to the present invention, the plate 36 connected to the inner duct 4 is further equipped with a cylindrical flow skirt 37. Therefore, the upper space of the casing 12 is covered with the plate 36 and the flow skirt 37, except for a small gap 38. The flow skirt 37 acts to restrict the flow of the solder 2 adjacent to the flow path 5. The length of the flow skirt 37 in the axial direction is not of significance.

According to the above features, solder oxide floating on the liquid surface of solder 2 in the solder vessel 30 can be collected by the plate 36 and the flow skirt 37. This can avoid solder oxide entering the annular path 5 of the electromagnetic pump 41, and therefore, fluctuation of the liquid level of solder 2 can be limited.

### (Second example)

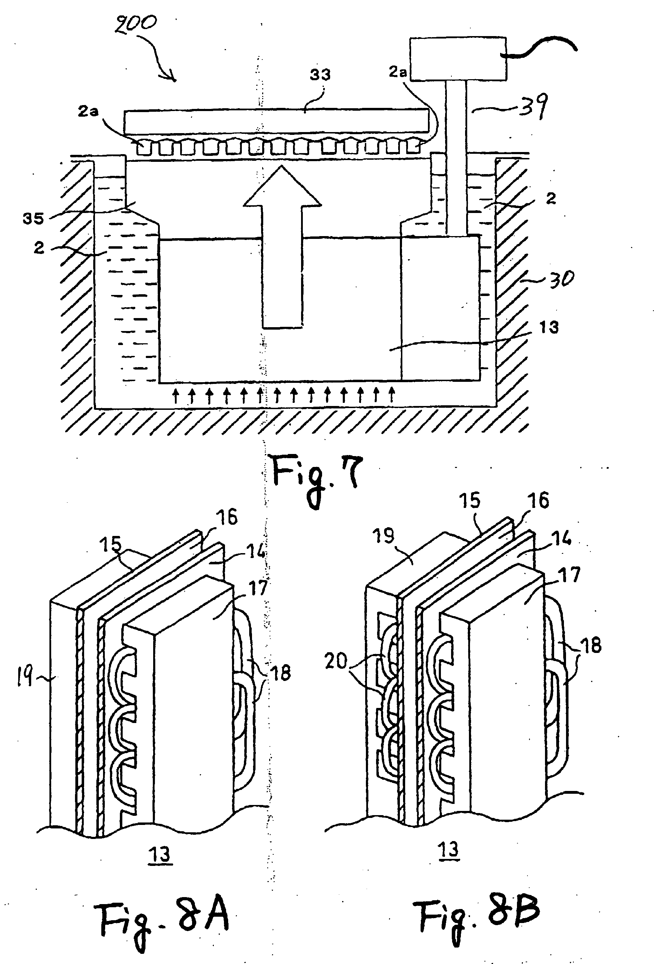

A second example is shown in Figs. 7, 8A and 8B. This example employs a flat linear type electromagnetic pump 13, as shown in Fig. 7, in place of the annular linear type electromagnetic pump of the first example and the embodiment of the invention.

Figs. 8A and 8B are partial perspective views showing main portions of the stators of the flat linear type electromagnetic pump 13.

The electromagnetic pump 13 is submerged below the liquid surface of solder 2. A nozzle 35, having a rectangular shape, is connected downstream of the electromagnetic pump 13. The nozzle 35 faces the object 33 to be soldered.

As shown in Fig. 8A, the electromagnetic pump 13 has two plates, an inner plate (inner duct) 14 and an outer plate (outer duct) 15, facing each other in parallel. The gap bounded by the plates 14 and 15 is defined as a flow path 16 for solder 2. An outer iron core 17, connected to back surface of the outer plate 14, has outer electromagnetic coils 18 in its slots. An inner iron core 19 is connected to back surface of the inner plate 15. The outer electromagnetic coils 18 generate a driving magnetic field by applying three-phase alternating current.

Further, it is possible to constitute the electromagnetic pump 13 as shown in Fig. 8B. In this example, another iron core (inner iron core) 19 is connected to back surface of the inner plate 15. The inner iron core 19 has inner electromagnetic coils 20 in its slots. Although Fig. 8A shows single stator structure, Fig. 8B shows double stator structure.

The outer iron core 17 and the outer electromagnetic coils 18 are supported by supporting structures (not shown) and are stored in the casing 12.

Here, the outer plate 14, the inner plate 15 and the casing 12 are made of nonmagnetic material. Preferably, the material is anti-corrosive against solder and flux as well as hard enough to withstand the high temperature of the solder 2.

The outer iron core 117 is made of ferromagnetic material. The outer electromagnetic coils 18 are constituted by combination of conductor and insulator; both the conductor and the insulator are anti-corrosive enough of the high temperature (more than 250°C) of the solder 2 and at the high temperature of Joule heat generated by the outer electromagnetic coils 18.

According to the second example, the same advantages, as of the first embodiment can be achieved. That is, the electromagnetic pump 13 of the soldering machine 200 is disposed in the solder vessel 34 and is submerged below the liquid surface of the solder 2. Therefore, the heat generated from the electromagnetic pump 13 can be conducted to the solder 2 in the solder vessel 34. Consequently, the capacity of the heater for melting the solder can be reduced.

Moreover, the electromagnetic pump 13 has a rectangular flat shape. Therefore, the spatial efficiency in the solder vessel 30 can be improved if the solder vegsel 30 is also rectangular.

Two plates, the outer plate 14 and the inner plate 15, are disposed in parallel to define a flow path in this embodiment; however, a single plates haying a horseshoe shape or a rectangular inner space can be applied in place of the plates 14 and 15. These examples also derive the same effect as the above-explained example.

Further, the solder 2 receives approximately, a double thrust by applying the double stator structure (Fig. 8B) to the electromagnetic pump 13, in comparison with the single stator structure (Fig. 8A).

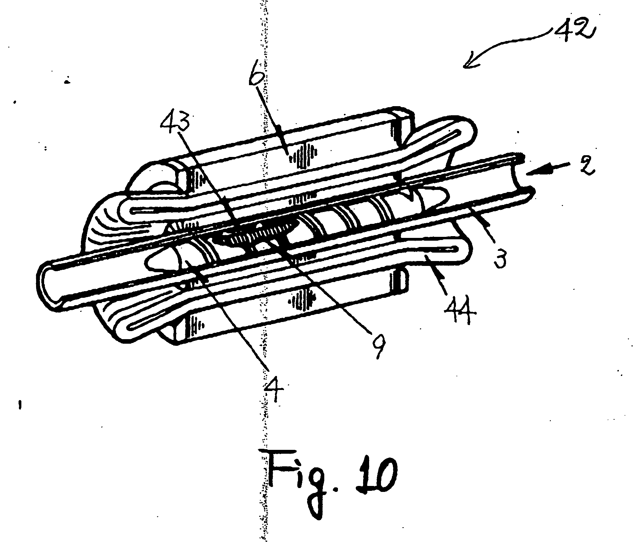

Another example is shown in Fig. 10. In this example, a helical type electromagnetic pump is employed. The overall structure of the soldering machine can be the same as of the above-explained embodiments.

As shown in Fig. 10, grooves 43 are formed on the inner duct 4 of the helical type electromagnetic pump 42. Molten solder 2 flows along the grooves 43 between the outer duct 3 and the inner duct 4.

Inner electromagnetic coils 44 are different from the electromagnetic coils 8 of the annular type electromagnetic pump 1 shown in Fig. 3; the winding directions thereof are set orthogonal to each other. This allows electromagnetic force to be generated in the circumferential direction of the inner duct 4. Solder 2 can be conveyed in the grooves 43 by turning the inner duct 4 around its axis.

In the case of using the electromagnetic pump 42 thus constituted, the same advantages as of the other examples are achieved.

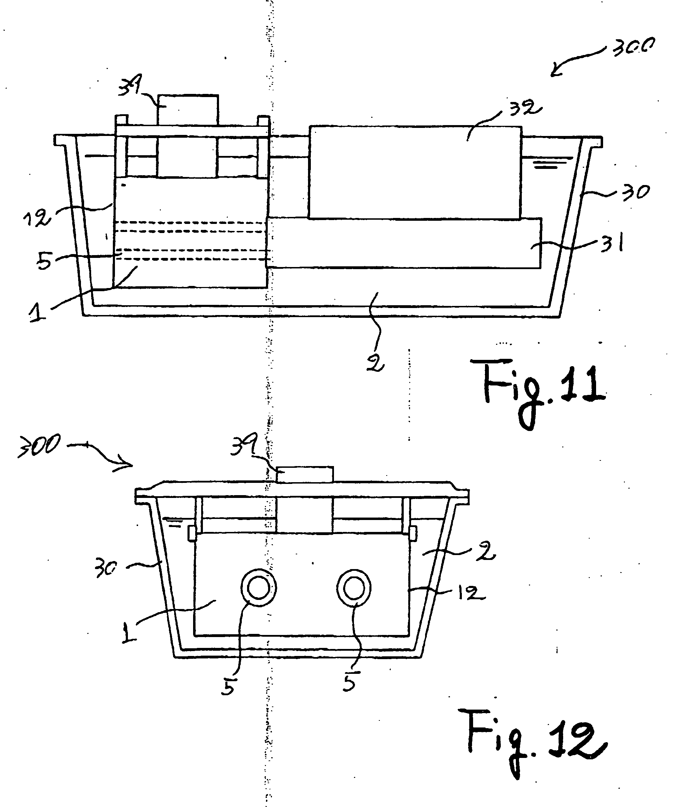

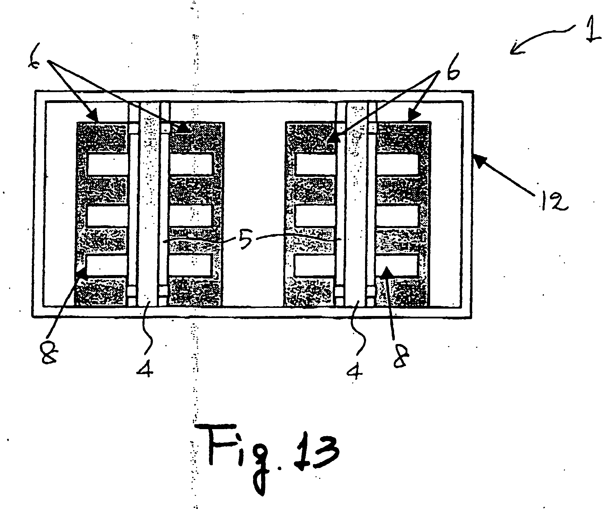

In Figs. 11, 12 and 13, another example is shown, in which, two annular linear type electromagnetic pumps 1 are employed in tandem in one solder vessel 12 of the soldering machine 300. The overall structure of the soldering machine is the same as of the first example. This structure can realize the benefit of sharing most elements while generating double the electromagnetic force.

As described above in detail, the present invention makes it possible to provide a soldering machine capable of utilizing solder having a higher melting point, by improving the thermal balance thereof.

## Claims

1. A soldering machine (100, 300), comprising:
a solder vessel (30) for containing solder (2) in a molten state,
an electromagnetic pump (1, 41) for generating an electromagnetic force to move the solder (2) in the solder vessel (30),
a nozzle (32) downstream of the electromagnetic pump (1, 41) that ejects the solder (2) in the solder vessel (30) onto an object to be soldered (33), and
a casing (12) enclosing the pump (1, 41), **characterized in that** the soldering machine (100, 300) further comprises
a flow path penetrating the casing (12) for allowing solder (2) therein,
a first iron core (6) disposed in the casing (12) and connected to the flow path, and
a coil (8) connected to the first iron core (6) for generating an electromagnetic force to move solder (2) in the flow path, wherein
the electromagnetic pump (1, 41) has an outer duct (3) and an inner duct (4), wherein in use the outer duct (3) is submerged below the liquid surface of the solder (2), and the inner duct (4) has a projection that comes up to the liquid level of the solder (2) in the solder vessel (30), and
the electromagnetic pump (1, 41) further has a flat plate (36) connected to the inner duct (4) and a flow skirt (37) attached to the flat plate (36) such that the flow skirt (37) surrounds an upper part of the circumference of the casing (12), wherein
the upper space of the casing (12) is covered with said flat plate (36) and said flow skirt (37) such that a gap (38) is present between said flow skirt (37) and the part of the casing (12) surrounded by said flow skirt (37), so as to restrict solder oxide floating on the liquid surface of solder (2) in the solder vessel (30) entering the electromagnetic pump (1, 41).

2. The soldering machine (100, 300) according to claim 1, wherein in use the electromagnetic force generated by the coil (8) circulates solder (2) in the solder vessel (30).

3. The soldering machine (100, 300) according to claim 1 or 2, wherein the flow path comprises an annular-shaped section surrounded by the first iron core (6), and has a second iron core (9) inserted therein.

4. The soldering machine (100, 300) according to claim 3, wherein the electromagnetic pump (1, 41) is an annular linear type electromagnetic pump.

5. The soldering machine (100, 300) according to claim 3, wherein the second iron core (9) is selectively removable from the flow path.

6. The soldering machine (100, 300) according to claim 5, further comprising a locking structure (22) for securing the second iron core (9) to the flow path.

7. The soldering machine (100, 300) according to any one of claims 1 to 6, wherein the soldering machine (100, 300) in use contains leadless solder (2).

## Patentansprüche

1. Lötgerät (100, 300), umfassend:
einen Lötmittelbehälter (30) zum Aufnehmen eines Lötmittels (2) im geschmolzenen Zustand,
eine elektromagnetische Pumpe (1, 41) zum Erzeugen einer elektromagnetischen Kraft zum Bewegen des Lötmittels (2) in dem Lötmittelbehälter (30),
eine Düse (32) stromabwärts von der elektromagnetischen Pumpe (1, 41), die das Lötmittel (2) in dem Lötmittelbehälter (30) auf einen zu lötenden Gegenstand (33) ausstößt, und
ein Gehäuse (12), das die Pumpe (1, 41) umschließt,
**dadurch gekennzeichnet, dass** das Lötgerät (100, 300) ferner
einen Strömungsweg, der durch das Gehäuse (12) hindurchtritt, um das Vorliegen von Lötmittel (2) darin zu ermöglichen,
einen ersten Eisenkern (6), der in dem Gehäuse (12) angeordnet ist und mit dem Strömungsweg verbunden ist, und
eine Spule (8), die mit dem ersten Eisenkern (6) zum Erzeugen einer elektromagnetischen Kraft zum Bewegen von Lötmittel (2) in dem Strömungsweg verbunden ist,
umfasst, wobei
die elektromagnetische Pumpe (1, 41) einen äußeren Kanal (3) und einen inneren Kanal (4) umfasst, wobei im Gebrauch der äußere Kanal (3) unterhalb der Flüssigkeitsoberfläche des Lötmittels (2) eingetaucht ist und der innere Kanal (4) eine Vorwölbung aufweist, die zu dem Flüssigkeitsniveau des Lötmittels (2) in dem Lötmittelbehälter (30) hinaufreicht, und
die elektromagnetische Pumpe (1, 41) ferner eine flache Platte (36), die mit dem inneren Kanal (4) verbunden ist, und einen Strömungsmantel (37) aufweist, der derart an der flachen Platte (36) angebracht ist, dass der Strömungsmantel (37) einen oberen Teil des Umfangs des Gehäuses (12) umgibt, wobei
der obere Raum des Gehäuses (12) mit der flachen Platte (36) und dem Strömungsmantel (37) derart bedeckt ist, dass ein Spalt (38) zwischen dem Strömungsmantel (37) und dem Teil des Gehäuses (12), der von dem Strömungsmantel (37) umgeben ist, vorliegt, so dass das Eintreten von Lötmitteloxid, das auf der Flüssigkeitsoberfläche des Lötmittels (2) in dem Lötmittelbehälter (30) aufschwimmt, in die elektromagnetische Pumpe (1, 41) beschränkt ist.

2. Lötgerät (100, 300) nach Anspruch 1, bei dem im Gebrauch die elektromagnetische Kraft, die durch die Spule (8) erzeugt wird, das Lötmittel (2) in dem Lötmittelbehälter (30) umwälzt.

3. Lötgerät (100, 300) nach Anspruch 1 oder 2, bei dem der Strömungsweg einen ringförmigen Abschnitt, der von dem ersten Eisenkern (6) umgeben ist, und einen darin eingesetzten zweiten Eisenkern (9) umfasst.

4. Lötgerät (100, 300) nach Anspruch 3, bei dem die elektromagnetische Pumpe (1, 41) eine elektromagnetische Pumpe des ringförmig-linearen Typs ist.

5. Lötgerät (100, 300) nach Anspruch 3, bei dem der zweite Eisenkern (9) aus dem Strömungsweg selektiv entfernbar ist.

6. Lötgerät (100, 300) nach Anspruch 5, das ferner eine Verriegelungsstruktur (22) zum Befestigen des zweiten Eisenkerns (9) an dem Strömungsweg umfasst.

7. Lötgerät (100, 300) nach einem der Ansprüche 1 bis 6, wobei das Lötgerät (100, 300) im Gebrauch ein bleifreies Lötmittel (2) enthält.

## Revendications

1. Machine à braser (100, 300), comprenant :
un récipient de brasure (30) destiné à contenir une brasure (2) dans un état fondu,
une pompe électromagnétique (1, 41) pour générer une force électromagnétique pour déplacer la brasure (2) dans le récipient de brasure (30),
un embout (32) en aval de la pompe électromagnétique (1, 41) qui éjecte la brasure (2) présente dans le récipient de brasure (30) vers un objet à braser (33), et
un carter (12) enfermant la pompe (1, 41), **caractérisée en ce que** la machine à brasser (100, 300) comprend en outre
un trajet d'écoulement pénétrant dans le carter (12) pour permettre l'entrée de la brasure (2),
un premier noyau de fer (6) disposé dans le carter (12) et relié au trajet d'écoulement, et
une bobine (8) reliée au premier noyau de fer (6) pour générer une force électromagnétique pour déplacer la brasure (2) dans le trajet d'écoulement, dans laquelle
la pompe électromagnétique (1, 41) possède un conduit externe (3) et un conduit interne (4), dans laquelle en utilisation, le conduit externe (3) est submergé en dessous de la surface liquide de la brasure (2), et le conduit interne (4) présente une projection qui sort du niveau liquide de la brasure (2) dans le récipient de brasure (30), et
la pompe électromagnétique (1, 41) possède en outre une plaque plane (36) reliée au conduit interne (4) et à une jupe d'écoulement (37) fixée à la plaque plane (36) de telle sorte que la jupe d'écoulement (37) entoure une partie supérieure de la circonférence du carter (12), dans laquelle
l'espace supérieur du carter (12) est recouvert de ladite plaque plane (36) et ladite jupe d'écoulement (37) de telle sorte qu'un espace (38) est présent entre ladite jupe d'écoulement (37) et la partie du carter (12) entourée par ladite jupe d'écoulement (37), afin de limiter l'oxyde de brasure flottant sur la surface liquide de la brasure (2) dans le récipient de brasure (30) entrant dans la pompe électromagnétique (1, 41).

2. Machine à braser (100, 300) selon la revendication 1, dans laquelle en utilisation, la force électromagnétique générée par la bobine (8) fait circuler la brasure (2) dans le récipient de brasure (30).

3. Machine à braser (100, 300) selon la revendication 1 ou 2, dans laquelle le trajet d'écoulement comprend une section de forme annulaire entourée par le premier noyau de fer (6), et possède un second noyau de fer (9) inséré à l'intérieur.

4. Machine à braser (100, 300) selon la revendication 3, dans laquelle la pompe électromagnétique (1, 41) est une pompe électromagnétique de type linéaire annulaire.

5. Machine à braser (100, 300) selon la revendication 3, dans laquelle le second noyau de fer (9) est sélectivement amovible du trajet d'écoulement.

6. Machine à braser (100, 300) selon la revendication 5, comprenant en outre une structure de blocage (22) pour fixer le second noyau de fer (9) au trajet d'écoulement.

7. Machine à braser (100, 300) selon l'une quelconque des revendications 1 à 6, dans laquelle la machine à braser (100, 300) en utilisation contient de la brasure sans plomb (2).
